# EUROPEAN PATENT APPLICATION

(11) **EP 2 113 767 A1**
(43) Date of publication of application: **04.11.2009**
(21) Application number: 09250880.3
(22) Date of filing: 27.03.2009
(51) Int. Cl.: G01N 23/00, G06T 11/00

(54) **Computed tomography systems and related methods involving localized bias**

(30) Priority: 30.04.2008 US 112565
(71) Applicant: United Technologies Corporation, Hartford, CT 06101 (US)
(72) Inventor: Strickland, Edwin L., Austin, TX 78726 (US); Warner, Rodney H., Austin, TX 78736 (US)
(74) Representative: Tomlinson, Kerry John

(57) **Abstract**

Computed tomography systems and related methods involving local thresholding are provided. In this regard, a representative computed tomography system for analyzing a target is operative to determine, with a biased density value differing from an average density value for the target, a location of an interface of the target.

## Description

### BACKGROUND

### Technical Field

The invention generally relates to non-destructive inspection of components.

### Description of the Related Art

Computed tomography (CT) involves the use of X-rays that are passed through a target. Based on the amount of X-ray energy detected at an array of detectors located downstream of the target, information about the target can be calculated. By way of example, representations of target shape and density in three dimensions can be determined.

### SUMMARY

Computed tomography systems and related methods involving localized bias are provided. In this regard, an exemplary embodiment of a computed tomography system for analyzing a target is operative to determine, with a biased density value differing from an average density value for the target, a location of an interface of the target.

An exemplary embodiment of a computed tomography method comprises: directing X-rays at a target; determining an amount of attenuation of the X-rays attributable to the target; calculating target data representative of dimensions of the target based, at least in part, on the amount of attenuation determined; and biasing the target data using a bias value, the bias value corresponding to local image density of a portion of a displayed image generated from the target data.

Another exemplary embodiment of a computed tomography method comprises: determining a location of an interface of a target subjected to computed tomography using a density value other than an average density value for the target.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an exemplary embodiment of a system involving localized bias.
FIG. 2 is a schematic diagram depicting an image corresponding to a target.
FIG. 3 is a schematic diagram depicting an image corresponding to another target that shows signs of beam hardening.
FIG. 4 is a flowchart depicting functionality of an exemplary embodiment of a system involving localized bias.
FIG. 5 is a flowchart depicting functionality of another exemplary embodiment of a method involving localized bias.

### DETAILED DESCRIPTION

Computed tomography systems and related methods involving localized bias are provided, several exemplary embodiments of which will be described in detail. In this regard, some embodiments use a bias value (e.g., a localized computed density value) for a portion of a target to refine measurements corresponding to that portion of the target. This is in contrast conventional CT systems that commonly form a point cloud describing surface locations of an inspected target using an average density of the entire target. That is, edges of the target are typically identified as locations that exhibit density values of one-half the difference between the average density of the target and the density of air. By using potentially different bias values for different portions of a target that modify the value for average density of the target locally, target edge locations can be more accurately determined. This potentially results in more accurate measurements.

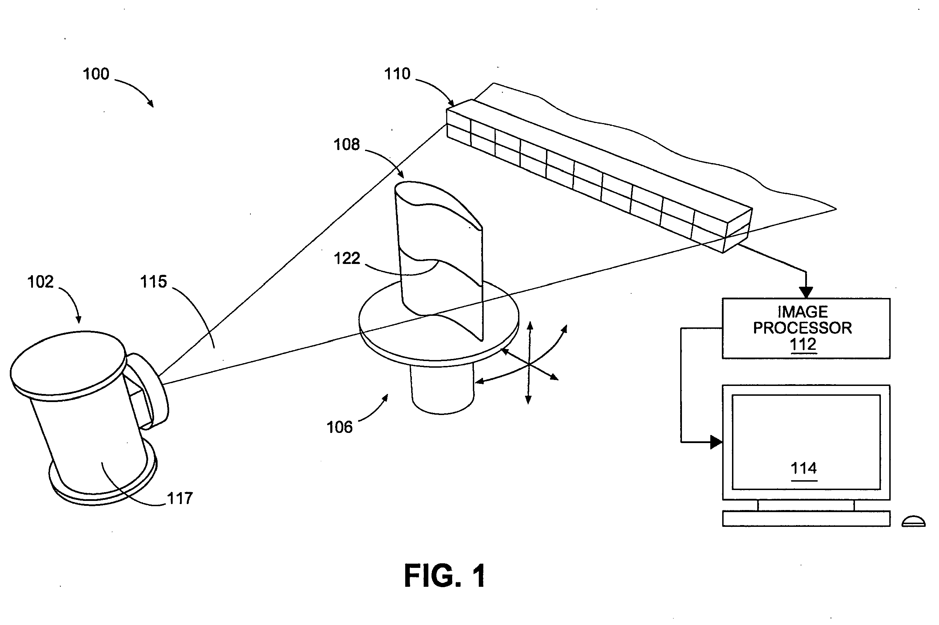

In this regard, FIG. 1 is a schematic diagram depicting an exemplary embodiment of a CT system involving localized bias. As shown in FIG. 1, system 100 includes an X-ray source 102, a turntable 106 on which a target 108 is positioned, a detector array 110, an image processor 112, and a display/analysis system 114. In operation, X-ray source 102 (e.g., a point source) is operative to emit X-rays. In this embodiment, the X-rays are emitted as a fan-shaped beam 115. Notably, source 102 incorporates an integrated source collimator (not shown in FIG. 1) for shaping the fan-shaped beam.

Turntable 106 is a representative apparatus used for positioning a target, in this case, target 108. In the embodiment of FIG. 1, target 108 is a gas turbine engine blade. In operation, turntable 106 is movable to expose various portions of the target to the X-rays emitted by source 102. In this embodiment, turntable 106 can be used to rotate the target both clockwise and counterclockwise, as well as to raise and lower the target. Altering of a vertical position of the target in this embodiment is accomplished to expose different heights (e.g., horizontal planes) of the target to the fan-shaped beam. Notably, the elevation of the beam is fixed in this embodiment.

Detector array 110 is positioned downstream of the turntable. The detector array is operative to output signals corresponding to an amount of X-rays detected. In this embodiment, the array is a linear array, although various other configurations can be used in other embodiments. Notably, the X-rays emitted by source 102 can be collimated upstream and/or downstream of the target in some embodiments.

The detector array generally includes an array of scintillators that emit light responsive to receiving X-rays. The intensity of the light emitted corresponds to the intensity for the X-rays received. The light emitted by the scintillators is directed to another array (e.g., an array of photo-multipliers), which converts the light into electrical signals that include information corresponding to the amount of X-rays detected.

Image processor 112 receives the information corresponding to the amount of X-rays detected (i.e., target data) and uses the information to compute image data corresponding to the target. The image data is provided to display/analysis system 114 to enable user interaction with the information acquired by the detector array.

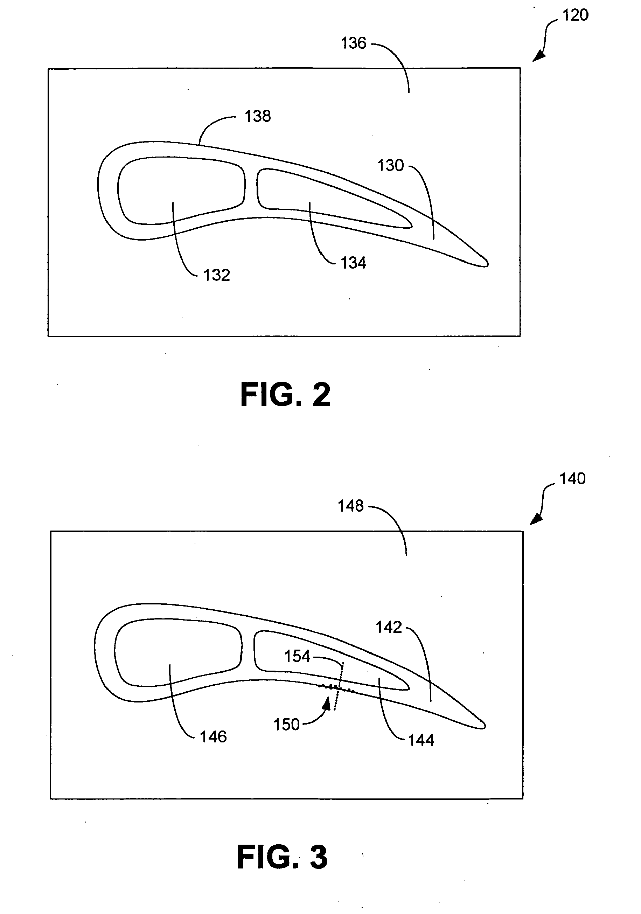

FIG. 2 is a schematic diagram depicting an image corresponding to a target inspected by the CT system of FIG. 1. Specifically, FIG. 2 schematically depicts a representative image 120 that can be displayed to a user via a display device of display/analysis system 114. Notably, image 120 corresponds to a horizontal slice 122 of target 108.

In FIG. 2, image 120 includes four distinct areas: area 130 (which corresponds to material of the target), areas 132 and 134 (which correspond to internal cavities of the target), and area 136 (which corresponds to air surrounding the target). Although the degree of contrast between the areas of image 120 is not readily appreciated viewing the schematic diagram of FIG. 2, it should be noted that area 130 typically is displayed to appear bright white against a background of black located in areas 132, 134 and 136. Such an image provides a relatively high degree of contrast between target features (which typically appear bright) and non-target features, and does not show beam-hardening effects. As such, edges of the target (e.g., edge 138) are readily discernible.

In contrast, FIG. 3 schematically depicts an image 140 that shows beam-hardening effects. Specifically, image 140 includes five distinct areas: area 142 (which corresponds to material of the target), areas 144 and 146 (which correspond to internal cavities of the target), area 148 (which corresponds to air surrounding the target), and area 150 (which an area of suspected beam hardening). As viewed, area 142 appears bright white against a background of black located in areas 144, 146 and 148; however, area 150 exhibits a lower image density than would otherwise be expected at a location comprising the same material as that of area 142, for example. Thus, area 150 appears to exhibit beam hardening and, as such, area 150 appears less bright than does area 142 (e.g., 70% as bright).

Beam hardening manifests as a reduction of image density that can vary in its effects across an image generated by a CT system. Notably, beam hardened portions of an image (such as area 150) can lead to inaccurate measurements of a target. By way of example, the presence of area 150 can make an accurate thickness measurement of target 108 along line 154 indeterminate. This is oftentimes the case because in a conventional CT system that uses an average density value of the entire target for determining target-air interfaces (e.g., edges), beam hardening of a portion of the target causes the CT system to incorrectly locate the local interface.

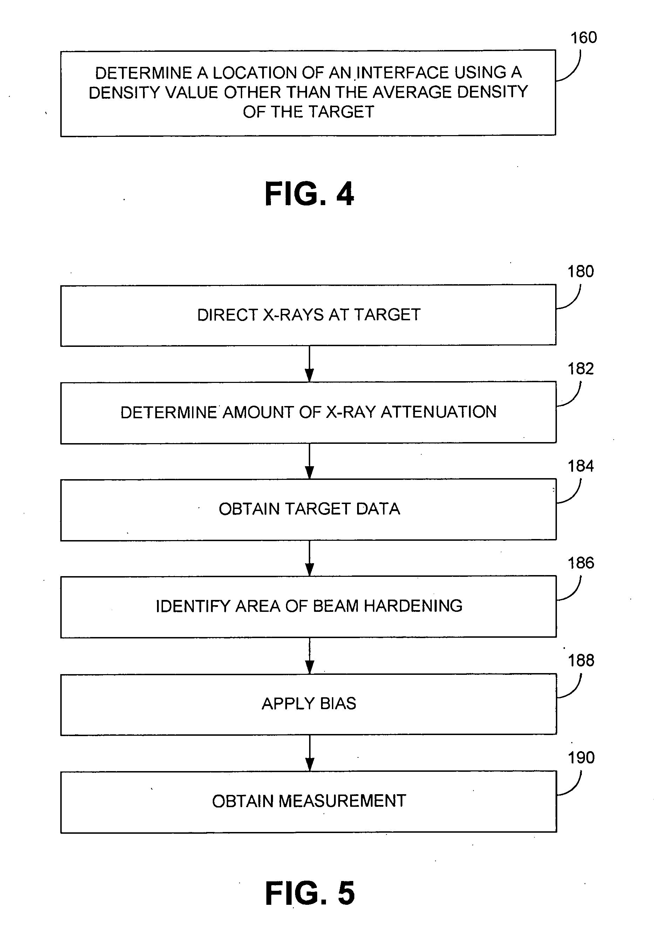

In this regard, FIG. 4 is a flowchart depicting functionality of an exemplary embodiment of CT system. As shown in FIG. 4, the functionality (or method) involves at step 160 determining a location of an interface (e.g., a target-air interface) of a target subjected to computed tomography using a density value other than an average density value for the target. In some embodiments, the aforementioned functionality can be performed by an image processing system and/or display/analysis system, such as image processing system 112 and display/analysis system 114 of FIG. 1.

As an example, assume that the image density of area 142 of image 140 (FIG. 3.) is 100%. Assume also that the image density of area 150 is 75% (thus, area 150 appears gray-toned relative to area 142). Since area 150 is an area suspected as exhibiting the effects of beam hardening, a local density value that is 75% of the average density value for the entire target can be used when computing the locations of the target-air interfaces in a vicinity of area 150. Modifying the density value locally is accomplished by applying a bias value (e.g., a bias value of 75%) to modify the computation of the interface locations. In this example, the location of the local target-air interface would then be calculated to be the location exhibiting a material density of 50% of the local target density (which is 75% of the average target density) and 50% of the local air density.

FIG. 5 is a flowchart depicting functionality of another exemplary embodiment of a system involving localized bias. As shown in FIG. 5, the functionality (or method) may be construed as beginning at block 180, in which X-rays are directed at a target. In block 182, an amount of attenuation of the X-rays attributable to the target is determined. In block 184, target data representative of the target is obtained based, at least in part, on the amount of attenuation determined. In some embodiments, the target data is used to determine locations of target-air interfaces using an average density value for the target. In block 186, one or more areas corresponding to the target are identified as exhibiting the effects of beam hardening. In some embodiments, this can include displaying an image generated from the target data and analyzing the image to identify areas of reduced image density.

Responsive to determining that an area exhibits beam hardening, a bias can be applied to modify calculations associated with the identified area (block 188). For instance, a bias value can be used to modify the computation of the location of any interfaces (e.g., material-material or material-air interfaces) associated with the area. In some embodiments, the bias value corresponds to the local image density of an image generated by the CT system, thus, the product of the bias value and the average density value provides a local density value. In block 190, one or more measurements can be obtained using refined computations that incorporate the bias. By way of example, the measurements can include, but are not limited to, interior dimensions of the target. In some embodiments, the target can be a formed of metal. Additionally or alternatively, the target can be a gas turbine engine component, such as a turbine blade.

It should be noted that a computing device can be used to implement various functionality, such as that attributable to the image processor 112, display/analysis system 114 and/or the flowcharts of FIGS. 4 and 5. In terms of hardware architecture, such a computing device can include a processor, memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The processor may be a hardware device for executing software, particularly software stored in memory. The processor can be a custom made or commercially available processor, a central processing unit (CPU), an auxiliary processor among several processors associated with the computing device, a semiconductor based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, for example but not limited to, a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the computing device is in operation, the processor can be configured to execute software stored within the memory, to communicate data to and from the memory, and to generally control operations of the computing device pursuant to the software. Software in memory, in whole or in part, is read by the processor, perhaps buffered within the processor, and then executed.

It should be emphasized that the above-described embodiments are merely possible examples of implementations set forth for a clear understanding of the principles of this disclosure. Many variations and modifications may be made to the above-described embodiments without departing substantially from the principles of the disclosure.

## Claims

1. A computed tomography system (100) for analyzing a target (108), the system being operative to determine, with a biased density value differing from an average density value for the target, a location of an interface of the target.

2. The system of claim 1, wherein the biased density value is computed with a bias value, the bias value corresponding to a localized image density of a displayed image of the target generated by the computed tomography system.

3. The system of claim 1 or 2, further comprising an X-ray source (102) operative to emit X-rays toward the target.

4. The system of claim 1, 2 or 3, wherein the system is operative to calculate a biased density value responsive to determining that target data corresponding to the target exhibits beam hardening effects.

5. A computed tomography method comprising:
directing (180) X-rays at a target;
determining (182) an amount of attenuation of the X-rays attributable to the target;
calculating (184) target data representative of dimensions of the target based, at least in part, on the amount of attenuation determined; and
biasing (188) the target data using a bias value, the bias value corresponding to local image density of a portion of a displayed image generated from the target data.

6. The method of claim 5, wherein biasing the target data is performed responsive to determining (186) that the portion of the image is suspected of exhibiting effects of beam hardening.

7. The method of claim 5 or 6, wherein:
calculating target data comprises determining locations of target-air interfaces by using an average density value for the target; and
biasing the target data comprises biasing a first portion of the target data corresponding to a first portion of the target using a first bias value, the first bias value corresponding to the image density of a first portion of the displayed image, the first portion of the displayed image corresponding to the first portion of the target.

8. The method of claim 7, further comprising measuring a dimension of the first portion of the target using the target data biased by the first bias value.

9. The method of claim 8, wherein the dimension is associated with an interior cavity (144, 146) of the target.

10. The method of claim 5, 6, 7, 8 or 9, wherein the target comprises metal; and preferably wherein the target is a gas turbine engine component.

11. A computed tomography method comprising:
determining (160) a location of an interface of a target subjected to computed tomography using a density value other than an average density value for the target.

12. The method of claim 11, further comprising measuring a dimension of target using the location.

13. The method of claim 11 or 12, wherein the density value is calculated by biasing the average density value with a bias value corresponding to a vicinity of the location.

14. The method of claim 13, further comprising selecting the bias value by identifying a zone in a vicinity of the location that exhibits beam hardening, the bias value corresponding to an attribute exhibited by the zone.

15. The method of claim 13 or 14, wherein the bias value corresponds to an image density.
